# EUROPEAN PATENT SPECIFICATION

(11) **EP 0 916 147 B1**
(45) Date of publication and mention of the grant of the patent: **03.03.2004**
(21) Application number: 98922788.9
(22) Date of filing: 30.04.1998
(51) Int. Cl.: H01H 9/02, H01R 13/639

(54) **TAMPER-PROOF PLATE FOR ELECTRICAL TERMINALS**
SICHERHEITSPLATTE FÜR ELEKTRISCHE ANSCHLÜSSE
PLAQUE INVIOLABLE POUR BORNES ELECTRIQUES

(30) Priority: 20.05.1997 IT MI970353 U
(43) Date of publication of application: 19.05.1999
(73) Proprietor: GEWISS S.p.A., I-24069 Cenate Sotto (Bergamo) (IT)
(72) Inventor: BOSATELLI, Domenico, I-24069 Cenate Sotto (IT); CONTARDI, Augusto, I-21100 Varese (IT); PIANEZZOLA, Sergio, I-21100 Calcinate del Pesce (IT)
(74) Representative: Forattini, Amelia
(86) International application number: PCT/EP1998/002558
(87) International publication number: WO 1998/053469

(56) References cited:
- EP-A- 0 717 425
- GB-A- 2 099 631

## Description

The present invention relates to a tamper-proof plate for electrical terminals.

Electrical devices such as modular automatic breakers and the like generally have terminals operated by actuation screws which can be accessed through holes in which it is possible to insert the tip of a screwdriver or other tool.

Sometimes the device must not be tampered with by unauthorized personnel after installation; accordingly, it is necessary to apply seals capable of clearly indicating any tampering. So-called hole plugs are usually used for this purpose.

GB-2099631 discloses an electric circuit breaker with a terminal cover, wherein a locking rod can be inserted in a recess of the cover and secured by a wire, for further securement.

The aim of the present invention is to provide a plate to be applied to terminals of electrical devices in order to prevent access to the terminals and clearly indicate tampering therewith.

An object of the invention is to provide a plate which is cheap and simple from the point of view of production.

This aim, this object and others which will become apparent hereinafter are achieved by a tamper-proof plate for electrical terminals as claimed in the appended claim.

Further characteristics and advantages will become apparent from the description of the tamper-proof plate for electrical terminals, which is illustrated by way of non- limitative example in the accompanying drawings, wherein:
Fig. 1 is a perspective view of the tamper-proof plate according to the invention;
Figs. 2, 3, and 4 are lateral elevation views, showing respectively the plate inserted in a terminal strip of an electrical device, during extraction, and fully extracted from the terminal strip of the electrical device.

With reference to the above figures, the tamper-proof plate according to the invention, generally designated by the reference numeral 1, includes a central portion 3 which is elastically hinged to a structural portion 5 and is advantageously formed monolithically and made of plastic, for example by molding.

The structural portion 5 includes two rings 7, each of which forms a hole whose dimensions are suitable for the insertion of a lead wire 11 or other similar device which can be used for security seals.

The pair of rings surrounds an interference member 9 which is rigidly coupled to the central portion 3, so that the presence of the wire 11 in the rings 7 prevents the interference member from entering the space 13 between the rings.

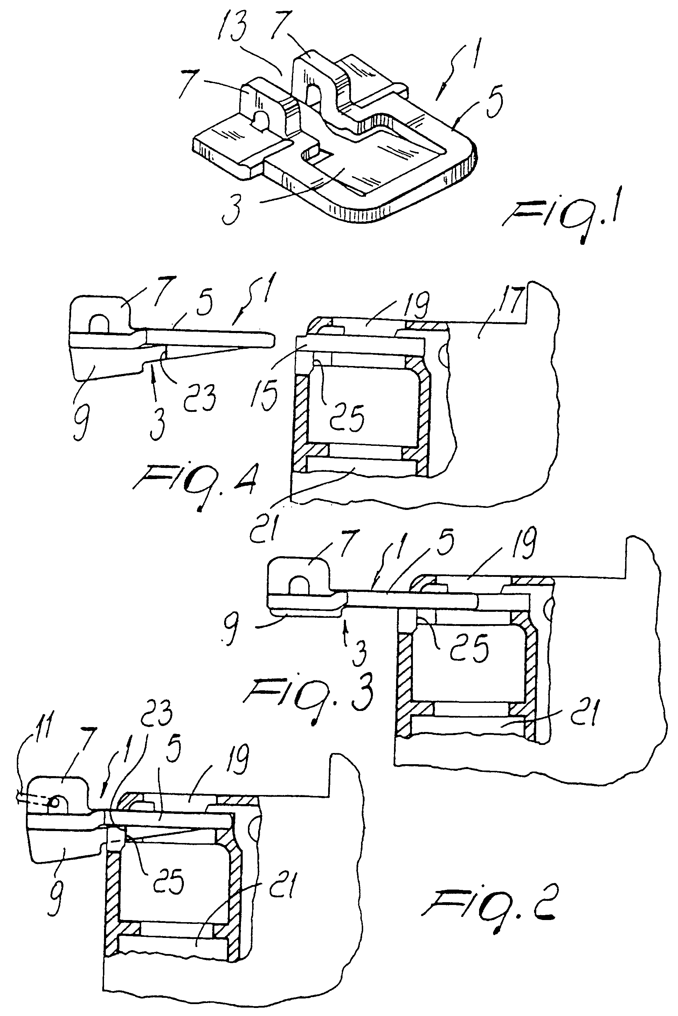

The operation of the tamper-proof plate is very simple and is evident from the figures. The tamper-proof plate 1 can be inserted in a seat 15 of an electrical device 17, for example at the access holes 19 of terminals 21. The tamper-proof plate 1 is inserted in the seat 15 by elastically moving the portion 3 as shown in Fig. 3. When the plate 1 is fully inserted, the central portion 3 elastically returns to its natural inclined position and the edges 23 of the central portion abut against the abutment 25 of the seat 15, making it impossible to extract the plate without elastically deforming the central portion. When the plate is inserted in the seat, as shown in Fig. 2, it is possible to insert the lead wire 11 in the rings 7.

In practice it has been found that the invention achieves the intended aim and objects.

The materials used, as well as the dimensions, may of course be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A tamper-proof plate for electrical terminals, comprising a central portion (3) which is elastically hinged to a structural portion (5) in order to determine an unstable position for the insertion of said plate (1) and a stable position for locking said plate (1), said central portion (3) being adapted to interact with an abutment means provided on an electrical device, said structural portion having a ring means (7) for applying a sealing member (11) which interferes with said central portion in order to prevent said central portion to move to said insertion position when said sealing member is applied to said ring means; said plate, composed of said structural portion, said central portion and said ring means, being formed monolithically; **characterized in that** said ring means (7) surround an interference member (9) which is rigidly coupled to said central portion so that the presence of said sealing member (11) in said ring means (7) prevents the interference member (9) from entering the space between said ring means (7).

## Patentansprüche

1. Sicherheitsabdeckplatte für elektrische Anschlüsse, aufweisend ein Zentralteil (3) welches elastisch an ein Strukturteil (5) angehängt ist um für das Einsetzen der Platte (1) eine instabile Position und für das Sichern der Platte (1) eine stabile Position festzulegen, wobei das Zentralteil (3) so ausgeführt ist, das es mit einem Wangenteil auf einem elektrischen Gerät wechselwirken kann, wobei in das Strukturteil ein Ringelement (7) zur Aufnahme eines Sicherungsstifts (11) aufweist, welcher mit dem Zentralteil wechselwirkt um das Zentralteil daran zu hindern sich in die Einsteckposition zu bewegen wenn der Sicherungsstift in das Ringelement eingeführt ist; wobei die Platte, bestehend aus einem Strukturteil, einem Zentralteil und einem Ringelement einteilig geformt ist; **dadurch gekennzeichnet, daß** das Ringelement (7) umrahmt wird von einem Wechselwirkungsglied (9) welches hinreichend am Zentralteil befestigt ist, so das die Anwesenheit des Sicherungselementes (11) im Ringelement (7) das Wechselwirkungsglied (9) daran hindert in den Bereich zwischen den Ringelementen (7) zu gelangen.

## Revendications

1. Plaque inviolable pour bornes électriques, comportant une partie centrale (3) qui est articulée élastiquement sur une partie de structure (5) afin de déterminer une position instable pour l'insertion de ladite plaque (1) et une position stable pour bloquer ladite plaque (1), ladite partie centrale (3) étant adaptée pour agir mutuellement avec des moyens de butée agencés sur un dispositif électrique, ladite partie de structure ayant des moyens formant anneau (7) destinés à l'application d'un élément de scellage (11) qui interfère avec ladite partie centrale afin d'empêcher ladite partie centrale de se déplacer vers ladite position d'insertion lorsque ledit élément de scellage est appliqué sur lesdits moyens formant anneau ; ladite plaque, composée de ladite partie de structure, de ladite partie centrale et desdits moyens formant anneau, étant formée de manière monolithique ; **caractérisée en ce que** lesdits moyens formant anneau (7) entourent un élément d'interférence (9) qui est relié de manière rigide à ladite partie centrale, de sorte que la présence dudit élément de scellage (11) dans lesdits moyens formant anneau (7) empêche l'élément d'interférence (9) de pénétrer dans l'espace existant entre lesdits moyens formant anneau (7).
